# EUROPÄISCHE PATENTANMELDUNG

(11) **EP 4 043 302 A1**
(43) Veröffentlichungstag der Anmeldung: **17.08.2022**
(21) Anmeldenummer: 21157350.6
(22) Anmeldetag: 16.02.2021
(51) Int. Cl.: B60T 7/20, B60T 13/26, B60T 13/38, B60T 17/04, B60F 1/00

(54) **DRUCKLUFTBETÄTIGTES BREMSSYSTEM FÜR EINEN FAHRZEUG-ANHÄNGER**

(71) Anmelder: MoRailSo AG, 6022 Grosswangen (CH)
(72) Erfinder: MOOS, Beat, 6103 Schwarzenberg (CH)
(74) Vertreter: Clerc, Natalia

(57) **Zusammenfassung**

Ein druckluftbetätigtes Bremssystem für einen Fahrzeug-Anhänger, insbesondere für einen ausgleisbaren Anhänger, weist mindestens zwei Ventile (941, 942, 943) zur Weiterleitung von Druckluft einer Steuerleitung (8) an mindestens eine pneumatische Bremse (61) des Fahrzeug-Anhänger auf. Jedem der Ventile (941, 942, 943) ist ein Vorsteuerventil (931, 932, 933) zugeordnet, das in Strömungsrichtung von der Steuerleitung (8) zur pneumatischen Bremse (61) vor dem Ventil (941, 942, 943) angeordnet ist. Ein erstes dieser mindestens zwei Vorsteuerventile (931, 932, 933) schliesst bei einem anderen Luftdruck als ein zweites dieser mindestens zwei Vorsteuerventile (931, 932, 933). Mindestens eines der mindestens zwei Ventile (941, 942, 943) ist mit einem Druckregler (951, 952) zur Senkung der Druckluft der Steuerleitung (8) verbunden ist. Dieses Bremssystem ermöglicht die Verwendung des gesamten zu Verfügung stehenden Druckbereichs für die Bremsung des Anhängers, obwohl die Steuerung des Traktionsfahrzeugs bereits bei einem höheren Druck einen Schlauchabriss meldet.

## Beschreibung

### TECHNISCHES GEBIET

Die vorliegende Erfindung betrifft ein druckluftbetätigtes Bremssystem für einen Fahrzeug-Anhänger, insbesondere für einen ausgleisbaren Anhänger, und ein Verfahren zum Betreiben eines Bremssystems.

### STAND DER TECHNIK

Ausgleisbare Anhänger sind Fahrzeug-Anhänger, die auf der Schiene fahren können und die sich ausgleisen, also von den Gleisen entfernen lassen. Sie können lediglich für den Einsatz auf Schienen ausgebildet sein und müssen für den Transport auf der Strasse auf strassentaugliche Anhänger geladen werden. In anderen Ausführungsformen sind sie als Zwei-Wege-Anhänger ausgebildet. Dies sind Fahrzeug-Anhänger, die sowohl auf Gleisen als auch auf der Strasse fahren können.

Zum Ein- und Ausgleisen werden üblicherweise Eingleisstellen oder spezielle Hebevorrichtungen genutzt.

Diese Fahrzeug-Anhänger, auch Trailer genannt, werden auf dem Gleis, und je nach Ausbildung auch auf der Strasse, von geeigneten Traktionsfahrzeugen gezogen, beispielsweise von Lokomotiven, Gleisbagger, Dumper, Lastwagen oder Universal-Arbeits-Geräteträgermaschinen.

Die ausgleisbaren Anhänger gemäss dem Stand der Technik sind mit Bremsen ausgerüstet, welche üblicherweise pneumatisch bedient werden. Je nach Ausführungsform ist der Anhänger üblicherweise mit einer oder zwei Bremsachsen versehen. Jede der Achsen ist vorzugsweise mit zwei Trommel- oder Scheibenbenbremsen oder mit angedrückten Reibbelägen ausgestattet. Die Bremskraft auf den Anhänger wird von den Bremstrommeln erzeugt, die mittels eines mechanischen Hebels betätigt werden. Mechanische Bremsfedern gewährleisten üblicherweise, dass der Anhänger im Ruhezustand, also im energielosen Zustand, stets gebremst ist. Die Verwendung dieses Federspeicherprinzips gewährleistet die Sicherheit bei Verwendung des Anhängers. Die Bremse lässt sich vorzugsweise durch Druckaufbau mittels Druckluft lösen. Je höher der Luftdruck ist, umso stärker wirkt sie gegen die Federkraft der Bremsfedern und umso geringer wird die Bremskraft.

Ist eine Notlösung der Bremse notwendig, kommt üblicherweise ein Hydrauliköl zum Einsatz.

Die Traktionsfahrzeuge steuern mittels hydraulischem oder pneumatischem Druck die Bremse des ausgleisbaren Anhängers an. Hierzu wird eine Speiseleitung, d.h. ein Bremsschlauch, verwendet, die das Traktionsfahrzeug mit dem Anhänger verbindet und deren Druck mittels eines Bremspedals bzw. eines Bremshebels des Traktionsfahrzeugs veränderbar ist.

Üblicherweise wirkt der Druck der Speiseleitung direkt, d.h. in einem Verhältnis von 1:1, auf die Bremszylinder der Bremstrommeln. Nimmt der Druck der Speiseleitung, üblicherweise der Luftdruck, ab, so wird der Anhänger gebremst. Nimmt der Druck zu, so wird die Bremse des Anhängers gelöst. D.h. durch Bedienen der Bremse im Traktionsfahrzeug wird der Druck in der Speiseleitung reduziert und der Anhänger wird gebremst. Dasselbe geschieht üblicherweise, wenn die Speiseleitung, d.h. der Bremsschlauch, vom Anhänger oder vom Traktionsfahrzeug getrennt wird. Üblicherweise weist der Anhänger Manometer auf, die den pneumatischen bzw. den hydraulischen Druck anzeigen. Im Ruhezustand ist der angezeigte Druck üblicherweise 0 bar und die Bremsen des Anhängers sind voll aktiviert. Bei gelösten Bremsen beträgt der Luftdruck bei pneumatischen Systemen üblicherweise ca. 5 bar. Der angezeigte Druck entspricht üblicherweise dem Druck in der Speiseleitung. Dazwischenliegende Drücke ergeben eine teilweise Bremswirkung.

Neuere Bestimmungen für pneumatische Systeme fordern, zumindest in der Schweiz, dass ein Schlauchabriss, d.h. ein Unterbruch in der Speiseleitung, in der Führerkabine des Traktionsfahrzeugs erkennbar wird, damit der Fahrer umgehend reagieren kann. Eine Möglichkeit, dies zu erreichen, ist die Definition und Überwachung eines minimalen Drucks. Fällt der Druck unter einen definierten Wert, so meldet die Steuerung des Bremssystems des Traktionsfahrzeugs einen Abriss und stoppt das Traktionsfahrzeug. Bei Traktionsmitteln, d.h. Anhängern, liegt der übliche Mindestdruck zur Einleitung einer Bremsung unter der Annahme eines Schlauchabrisses bei ca. 2.5 bis 3.0 bar.

Dies hat nun zur Folge, dass der Druckbereich unterhalb dieses Minimalwerts bei Normalbetrieb nicht mehr zur Bremsung verwendet werden kann. Wenn der Fahrer bzw. der Maschinist eine normale Bremsung einleitet und er hierfür den Luftdruck nur bis 3.0 bar absenken kann, ohne eine Notbremsung auszulösen, ist die Bremswirkung der Bremsen des Anhängers selber relativ gering. Bei 3.0 bar liegt sie beispielsweise bei ca. 20%. Deshalb muss das Traktionsfahrzeug den Grossteil der Bremskraft aufbringen. Es ist sogar möglich, dass der Anhänger das Traktionsfahrzeug während der Bremsung anschiebt und somit die Bremsungswirkung des Traktionsfahrzeugs behindert.

### DARSTELLUNG DER ERFINDUNG

Es ist deshalb eine Aufgabe der Erfindung, ein verbessertes druckluftbetätigtes Bremssystem, insbesondere für ausgleisbare Anhänger, zu schaffen.

Diese Aufgabe löst ein druckluftbetätigtes Bremssystem mit den Merkmalen des Anspruchs 1.

Das erfindungsgemässe druckluftbetätigte Bremssystem für einen Fahrzeug-Anhänger, insbesondere für einen ausgleisbaren Anhänger, weist mindestens zwei Ventile zur Weiterleitung von Druckluft einer Steuerleitung an eine pneumatische Bremse des Fahrzeug-Anhängers auf, vorzugsweise an mindestens einen pneumatischen Bremszylinder. Jedem der Ventile ist ein Vorsteuerventil zugeordnet, das in Strömungsrichtung von der Steuerleitung zur pneumatischen Bremse vor dem Ventil angeordnet ist. Ein erstes dieser mindestens zwei Vorsteuerventile öffnet bei einem anderen Luftdruck als ein zweites dieser mindestens zwei Vorsteuerventile. Mindestens eines der mindestens zwei Ventile ist mit einem Druckregler zur Senkung der Druckluft der Steuerleitung verbunden.

Dank der gestuften Verwendung von zwei oder mehr Ventilen, die aufgrund von Vorsteuerventilen bei unterschiedlichen Drücken schliessen, und dank der Verwendung eines Druckreglers bei mindestens einem dieser Ventile ist es möglich, den Druckbereich, der in der Speiseleitung möglich ist, zu vergrössern. Somit lassen sich tiefere Luftdrücke an der pneumatischen Bremse einsetzen und die Bremsleistung erhöhen. Trotzdem ist es möglich, den maximalen Luftdruck der Speiseleitung ohne Druckminderung auf die pneumatische Bremse zu übertragen, um sie zu lösen. Dadurch lässt sich erreichen, dass der Anhänger maximale Bremsleistung erbringen kann, auch wenn die Sicherheitsschaltung für Schlauchabriss bereits bei einem erhöhten Luftdruckwert aktiv wird.

Üblicherweise umfasst die pneumatische Bremse mindestens einen pneumatischen Bremszylinder. Nachfolgend wird der Begriff Bremszylinder verwendet, wobei auch andere Arten von pneumatischen Bremsen umfasst sind.

Vorzugsweise sind die mindestens zwei Ventile, vorzugsweise alle Ventile, parallelgeschaltet. Sie sind über mindestens ein Wechselventil miteinander verbunden. Dadurch ist stets nur die Leitung durch eines dieser Ventile mit der Steuerleitung und dem pneumatischen Bremszylinder verbunden.

Vorzugsweise sind mindestens drei, vorzugsweise genau drei, Ventile und zu jedem Ventil je ein zugehöriges Vorsteuerventil vorhanden. Vorzugsweise sind alle diese Ventile parallelgeschaltet. Diese kaskadenartige Anordnung ermöglicht eine relativ feine Abstufung der Bremswirkung im vorgegebenen Druckbereich. Je mehr Ventile und Vorsteuerventile vorhanden sind, umso feiner ist die Abstufung der auf die Bremsen wirkenden Luftdrücke.

Vorzugsweise ist mindestens eines der Ventile keiner Druckreduzierung ausgesetzt. Dadurch lässt sich der Luftdruck in der Speiseleitung zum vollständigen Lösen der Bremsen einsetzen.

Vorzugsweise sind die Ventile 3/2- Wege-Ventile. Derartige Ventile sind bewährt und ermöglichen eine einfache Kopplung mit Druckreglern. Sie vereinfachen zudem die Entlüftung der Bremsleitung, die die Ventile mit der pneumatischen Bremse verbindet.

Vorzugsweise ist jeweils nur eines der Ventile mit der pneumatischen Bremse verbunden.

Vorzugsweise sind alle Vorsteuerventile bei maximalem Luftdruck geschaltet, d.h. sie sind offen. Beim Entlüften, d.h. beim Senken des Luftdrucks in der Bremsleitung, gehen die Vorsteuerventile in Abhängigkeit des aktuell herrschenden Luftdrucks in ihre Ruhestellung, d.h. sie werden geschlossen. Dabei schliesst jedes Vorsteuerventil vorzugsweise bei einem anderen Luftdruck, d.h. bei einem anderen Druckpunkt, als die übrigen Vorsteuerventile. Der maximale Luftdruck beträgt vorzugsweise circa 5 bar.

In bevorzugten Ausführungsformen sind alle Ventile bis auf eines mit je einem Druckregler zur Senkung der Druckluft der Steuerleitung verbunden. Da ein Ventil nicht mit einem Druckregler verbunden ist, kann dieses den Druck der Speiseleitung unverändert an den pneumatischen Bremszylinder, weitergeben. Schaltet das zugehörige Vorsteuerventil im Bereich des Maximaldrucks, so ist gewährleistet, dass die Bremswirkung der Bremse des Anhängers vollständig aufgehoben wird.

Vorzugsweise ist mindestens ein Wechselventil vorhanden zur Verbindung der Ventile mit der pneumatischen Bremse. Das mindestens eine Wechselventil verbindet jeweils dasjenige Ventil, über das der höchste Luftdruck an das mindestens eine Wechselventil angelegt ist. Vorzugsweise sind mindestens zwei Wechselventile vorhanden, die in Strömungsrichtung hintereinander angeordnet sind.

Die Verwendung von diesen zwei hintereinander geschalteten Wechselventilen vereinfacht die Leitungsführung und minimiert die Bauteile. Die Zahl der Wechselventile und der Ventile ist abhängig von der gewünschten Anzahl der Druckstufen.

In bevorzugten Ausführungsformen sind die Vorsteuerventile, die Ventile, der mindestens eine Druckregler und das mindestens eine Wechselventil in einem gemeinsamen Gehäuse, das eine Bremsbox bildet, angeordnet. Dies ist eine kompakte Vorrichtung, die sich auch in bestehende Anhänger nachträglich einbauen lässt.

Vorzugsweise sind die Ventile und/oder der mindestens eine Druckregler mit einem Luftbehälter verbunden. Der Luftbehälter ist optional. Er dient vorzugsweise zur Erstellung eines Gegendrucks und bei Verwendung einer Umstellanlage. Derartige Luftbehälter sind aus dem Stand der Technik bekannt.

Die Drücke, bei denen die Vorsteuerventile schalten, lassen sich beliebig wählen. Vorzugsweise berücksichtigen sie die lokalen Bestimmungen. In der Schweiz ist ein Maximaldruck von 5 bar üblich. Mit diesem Luftdruck sind die Bremsen des Anhängers vollständig gelöst. Gemäss den Bestimmungen in der Schweiz ist bei einem Druck von circa 2.5 bis 3 bar das Schlauchabrisssignal gefordert und das Anhalten des Traktionsfahrzeugs gefordert. Aufgrund dieser Vorgaben schliesst vorzugsweise ein erstes Vorsteuerventil in bei einem Druck von circa 4.3 bar und wirkt somit in einem Druckbereich von 4.4 bis 5 bar auf die pneumatischen Bremszylinder. Ein zweites Vorsteuerventil schliesst bei einem Druck von circa 3.9 bar und wirkt in einem Bereich von 4.0 bis 4.3 bar schaltet und der Luftdruck mittels des zweiten Druckreglers auf 2.2 bar reduziert ist. Ein drittes Vorsteuerventil schliesst bei einem Druck von circa 3.2 bar und wirkt in einem Druckbereich von 3.3 bis 3.9 bar auf die Bremszylinder, wobei der Luftdruck ist mittels des ersten Druckreglers reduziert wird, vorzugsweise auf 1.6 bar. Liegen andere Bestimmungen vor, lassen sich Ventile einsetzen, die bei anderen Drücken nach dem gleichen Prinzip arbeiten.

Vorzugsweise ist zwischen dem in Strömungsrichtung zur Bremse hin letzten Wechselventil und dem pneumatischen Zylinder ein Manometer zur Bestimmung des Luftdrucks an der pneumatischen Bremse angeordnet, damit vor Ort die Betriebssicherheit gewährleistet ist.

In bevorzugten Ausführungsformen ist ferner eine hydraulische Notbremse mit einer Hydraulikpumpe und mindestens einem Hydraulikbremszylinder vorhanden.

Im erfindungsgemässen Verfahren zum Betreiben eines druckluftbetätigten Bremssystems für einen Fahrzeug-Anhänger, insbesondere für einen ausgleisbaren Anhänger, wirkt ein Speisedruck auf eine pneumatische Bremse, wobei die pneumatische Bremse bei einem Maximaldruck gelöst ist und bei einem pneumatischen Minimaldruck maximal aktiviert ist. Der Speisedruck wird zwischen dem Maximaldruck und einem Abrissdruck, bei welchem eine Notbremsung ausgelöst wird, variiert. Der Abrissdruck ist höher als der Minimaldruck. Erfindungsgemäss wird der Speisedruck in Abhängigkeit von seinem Druckwert über jeweils ein anderes Ventil zur pneumatischen Bremse geleitet, wobei der Speisedruck bei Weiterleitung über mindestens eines dieser Ventile gedrosselt weitergeleitet wird.

Der Abrissdruck entspricht üblicherweise der gesetzlichen Vorgabe. In der Schweiz liegt er aktuell bei circa 2.5 - 3 bar. Der Minimaldruck, bei dem die Bremse vollständig aktiviert ist, liegt bei circa 0 bar. Dank des erfindungsgemässen Verfahrens ist es möglich, bei einem Bremsdruck bereits oberhalb des Abrissdruckes einen tieferen Druck als den Abrissdruck an die Bremse anzulegen, ohne dass bei höheren Drücken ein Druckverlust vorhanden ist, wo der Druck somit ungedrosselt auf die Bremse wirken kann.

Das Verfahren eignet sich insbesondere zum Betreiben des hier beschriebenen erfindungsgemässen Bremssystems.

Das erfindungsgemässe System und das erfindungsgemässe Verfahren eignen sich vor Allem als Bremssystem, bei welchem die Bremswirkung mit zunehmendem Druck abnimmt, wobei bei einem vorgegebenen Maximaldruck keine Bremswirkung und bei Atmosphärendruck maximale Bremswirkung vorliegt. Das Prinzip der kaskadenartigen Anordnung der Ventile mit ihren Vorsteuerventilen und den Wechselventilen lässt sich jedoch auch in anderen Bremssystemen einsetzen, beispielsweise indem kaskadenmässig geschlossen und nicht geöffnet wird oder indem die Vorsteuerventile in einem unteren und oberen Druckpunkt schliessen und nur in einem bestimmten Druckbereich offen sind.

Weitere Ausführungsformen sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines ausgleisbaren Anhängers;
- Figur 2: eine perspektivische Darstellung eines Teils des Anhängers gemäss Figur 1 mit einer Bremsachse und
- Figur 3: eine Schaltschema eines erfindungsgemässen Bremssystems für ausgleisbare Anhänger.

### BESCHREIBUNG BEVORZUGTER AUSFÜHRUNGSFORMEN

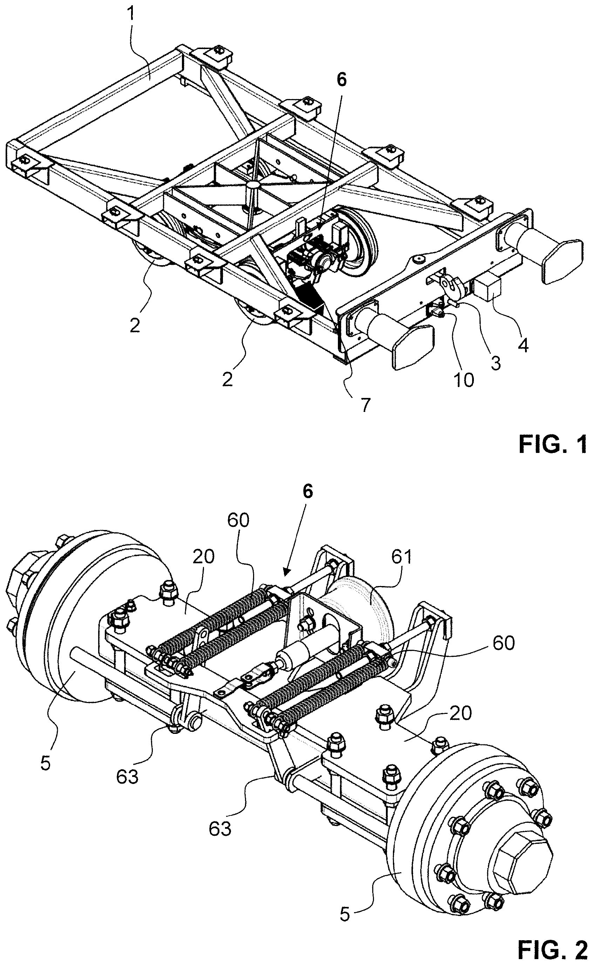

Figur 1 offenbart beispielhaft einen ausgleisbaren Anhänger mit einer erfindungsgemässen Bremsvorrichtung. Das erfindungsgemässe Bremssystem ist jedoch nicht auf diese Form eines Anhängers beschränkt. Es kann mit jeglicher Art von Anhängern verwendet werden, die über eine Druckleitung mit einem Traktionsfahrzeug verbunden sind. Vorzugsweise wird es für ausgleisbare Anhänger verwendet.

Der Anhänger weist einen Rahmen 1 mit einer Kupplung 10 für eine Zugstange auf. Mittels dieser Kupplung 10 lässt sich der Anhänger mit einem Traktionsfahrzeug, auch Zugfahrzeug genannt, verbinden.

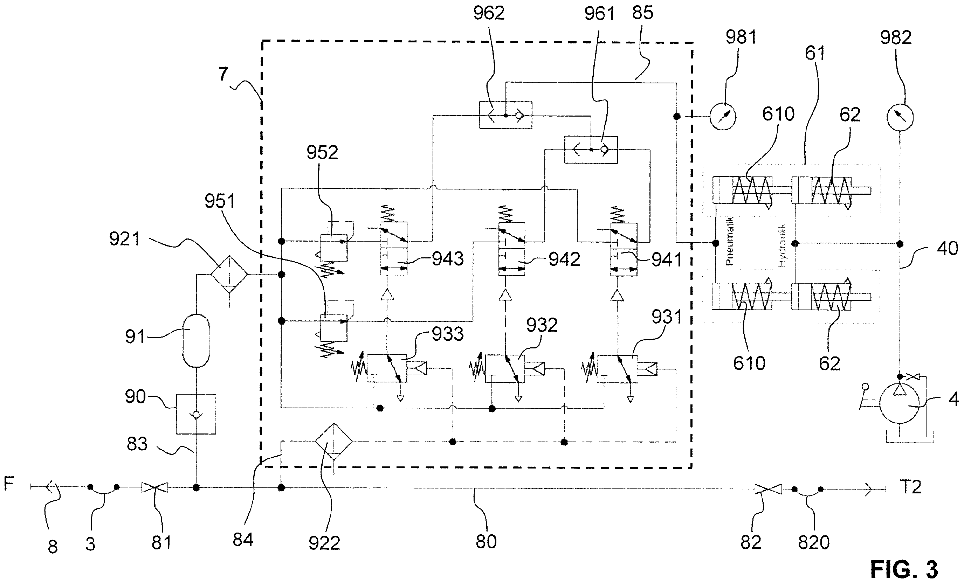

Am Rahmen 1 sind Spurachsen 20 mit Rädern 2 befestigt. In diesem Beispiel sind zwei Spurachsen 20 mit je zwei Rädern 2 vorhanden. Im Bereich der Kupplung 10 ist ferner ein Bremsluft-Anschluss 3 zur Verbindung mit einer lediglich in Figur 3 dargestellten Speiseleitung 8 vorhanden. Die Speiseleitung 8 führt zu einem Traktionsfahrzeug, welches den Anhänger auf den Schienen zieht.

Neben dem Bremsluft-Anschluss 3 ist eine Hydraulikpumpe angeordnet 4, die am Anhänger selber bedient wird.)

Mindestens eine, vorzugsweise beide Spurachsen 20 sind mit einer Bremseinheit 6 versehen. Eine Bremsbox 7 zur Steuerung der Bremseinheit 6 ist im Rahmen angeordnet. Ein Luftbehälter 91 ist vorzugsweise Teil der Bremsbox 7. In anderen Ausführungsformen ist er Teil des Bremssystems, jedoch ausserhalb des Gehäuses der Bremsbox 7 angeordnet.

Figur 2 zeigt eine derartige Spurachse 20 mit der Bremseinheit 6. Beide Räder sind mit einer Bremstrommel 5 versehen. Die Bremseinheit 6 weist mechanische Bremsfedern 60 auf, die auf Bremshebel 63 einwirken, welche die Bremstrommeln 5 in einer Bremsstellung halten. Eine Bremse, hier in Form eines Druckluft-Membranzylinders, ist in Figur 2 mit dem Bezugszeichen 61 versehen. Diese Bremse ist in diesem Beispiel ein Dual-Zylinder eingesetzt, die einen Druckluftzylinder 610 und einen Hydraulikzylinder 62 beinhalten, wie dies im Schaltbild gemäss Figur 3 erkennbar ist. In anderen Ausführungsformen werden separate pneumatischen Zylinder Hydraulikzylinder eingesetzt.

Hydraulikbremszylinder 62 sind über entsprechende, hier nicht dargestellte Leitungen mit der Hydraulikpumpe 4 verbunden. Sie ermöglichen bei Anlegen eines Hydraulikdrucks, dass die Bremsfedern 60 gespannt werden und so die Bremsung deaktiviert wird. Dies wird als Notfalllösung eingesetzt und auch zur Betriebs-Bremsung über die Fahrzeughydraulik.

Eine normale Bremsung erfolgt mittels Druckluft, der auf die pneumatischen Zylinder 610 wirkt. Der pneumatische Zylinder 610 spannt ebenfalls die Bremsfedern 60, bewegt die Bremshebel 63 und vermindert je nach Druck die Bremswirkung der Bremstrommeln 5 oder hebt sie vollständig auf.

In Figur 3 ist ein Schaltschema des erfindungsgemässen Bremssystems, wie es mehrheitlich in der Bremsbox 7 angeordnet ist, dargestellt.

Die Speiseleitung 8 führt bei offenem erstem Sperrhahn 81 Druckluft vom Traktionsfahrzeug F über den Bremsluftanschluss 3 zur Druckluftleitung 80 des Anhängers. Ein allfälliger zweiter Anhänger T2, der an diesem ersten Anhänger befestigt sein kann, lässt sich bei offenem zweiten Sperrhahn 82 des ersten Anhängers über einen zweiten Bremsluftanschluss 820 ebenfalls mit Druckluft von Traktionsfahrzeug versorgen.

Eine erste Druckluftleitung 83 führt über ein Rückschlagventil 90 von der Druckluftleitung 80 zum Luftbehälter 91 des Anhängers. Vom Luftbehälter 91 führt diese Leitung weiter durch einen optionalen ersten Filter 921 mit manueller Drainage in die Bremsbox 7.

Der optionale Luftbehälter 91 ist Teil eines Bremsdruckreglersystems. Er ist mit den Ventilen 941, 942, 943 und Druckreglern 951, 952 verbunden. Er dient zur Erzeugung eines Gegendrucks im Falle, dass der Anhänger eine Umstellanlage aufweist. Im dargestellten Beispiel befindet er sich ausserhalb der Bremsbox 7. In anderen Ausführungsformen ist er in der Bremsbox 7 angeordnet.

Eine zweite Druckluftleitung 84 führt von der Druckluftleitung des Anhängers durch einen optionalen zweiten Filter 922 mit manueller Drainage zu drei Ventilen 941, 942, 943. Den drei Ventilen 941, 942, 943 sind in Strömungsrichtung je ein Vorsteuerventil 931, 932, 933 vorgeschaltet. Die drei Ventile sind parallel zueinander geschaltet, die drei Vorsteuerventile ebenfalls.

Vorzugsweise sind die drei Ventile 941, 942, 943 3/2-Wegeventile. Jedes der Vorsteuerventile 931 932, 933 schliesst bei einem anderen Druck als die zwei anderen Vorsteuerventile. Vorzugsweise sind sie jedoch von demselben Grundtyp.

Je ein Anschluss des zweiten und dritten Ventils 942, 943 ist mit je einem ersten bzw. einem zweiten Druckregler 951, 952 verbunden. Das erste Ventil 941 ist nicht mit einem Druckregler oder einer Drosselung gekoppelt. Die drei Ventile 941, 942, 943 sind, falls vorhanden, mit dem Luftbehälter 91 verbunden, vorzugsweise über das erste Filter 921.

Der erste Druckregler 951 drosselt den Luftdruck auf einen höheren Wert als der zweite Druckregel 952.

Die zweiten Anschlüsse der Ventile 941, 942, 943 sind mit zwei hintereinander geschalteten Wechselventilen 961, 962 verbunden. Das erste Ventil 941 ist mit einem ersten Eingang des ersten Wechselventils 961 verbunden. Das zweite Ventil 942 ist mit dem zweiten Eingang des ersten Wechselventils 961 gekoppelt. Der Ausgang des ersten Wechselventils 961 ist mit einem ersten Eingang des zweiten Wechselventils 962 verbunden. Das dritte Ventil 943 ist mit dem zweiten Eingang dieses zweiten Wechselventils gekoppelt. Der Ausgang des ersten Wechselventils 961 führt über die dritte Druckleitung 85, die Bremsleitung, zur pneumatischem Bremse, hier zu den pneumatischen Bremszylindern 610.

Alle Vorsteuerventile 931, 932, 933 sind bei Maximaldruck, hier circa 5 bar, offen und somit sind auch die zugehörigen Ventile 941, 942, 943 offen. Somit sind alle Vorsteuerventile und Ventile geschaltet.

Bei Entlüftung, d.h. beim Senken des Speisedrucks, werden die unterschiedlichen Druckpunkte erreicht. Vorzugsweise schliesst das erste Vorsteuerventil 931 bei ca. 4.3 bar, das zweite Vorsteuerventil 932 bei ca. 3.9 bar und das dritte Vorsteuerventil 933 bei ca. 3.2 bar. Die zugehörigen Ventile 941, 942, 943 gehen dadurch jeweils ebenfalls ihre Ruhestellung und ermöglichen die Entlüftung der Bremsleitung 85. Die Wechselventile 961, 962 öffnen jeweils die Leitung für dasjenige Ventil 941, 942, 943, das den grössten Luftdruck an das jeweilige Wechselventil 961, 962-anlegt.

Ist somit das erste Vorsteuerventil 931 offen, so ist sein zugehöriges erstes Ventil 941 über die Bremsleitung mit der pneumatischen Bremse verbunden. Schliesst das erste Vorsteuerventil 941 bei Erreichen des ersten Druckpunkts, so führt die Leitung vom zweiten Ventil 942 zur Bremse, bis auch das zugehörige zweite Vorsteuerventil 932 bei Erreichen des zweiten Druckpunkts schliesst. Erst dann führt die Leitung bei offenem dritten Vorsteuerventil 933 vom dritten Ventil 943 zur Bremse. Schliesst auch das dritte Vorsteuerventil 933 bei Erreichen des dritten Druckpunkts, so wird die Bremsleitung 85 vollständig entlüftet und der Luftdruck über der Bremse sinkt auf 0 bar. Die Bremse ist vollständig aktiviert.

Das erste Vorsteuerventil 931 ist parallel zum zweiten und dritten Vorsteuerventil 932, 933 angeordnet. Der Druck der Speiseleitung 8, 84 wirkt somit ungedrosselt auf das erste Wechselventil 961. Dieses erstellt die Verbindung zwischen ersten Ventil 941 und zweiten Wechselventil 962, welches ebenfalls die Verbindung zu den pneumatischen Bremszylindern 610 erstellt. Der Druck der Steuerleitung liegt an den Bremszylindern an.

Wird der Speisedruck, auch Steuerdruckt genannt, gesenkt und erreicht den ersten Druckpunkt, hier circa 4.3 bar, so schliesst das erste Vorsteuerventil 941. Das erste Wechselventil 961 wechselt die Schaltstellung und somit gelangt nun der gedrosselte Druck des zweiten Ventils 942 über die zwei Wechselventile 961, 962 zu den pneumatischen Bremszylindern 610.

Die Vorsteuerventile 931, 932, 933 schalten somit die zugehörigen Ventile 941, 942, 943 und diese wirken in den jeweiligen Bereichen von circa 3.3 bis 3.9 bar, circa 4.0 bis 4.3 bar und circa 4.4. bis 5.0 bar auf die Bremszylinder 610.

Der erste Druckregler 951 drosselt den Luftdruck in der Bremsleitung 85 in diesem Beispiel auf circa 2.2 bar, der zweite Druckregler 952 auf circa 1.6 bar. Somit wirken in der zweiten Schaltstufe circa 2.2 bar auf die Bremsen und in der dritten Schaltstufe circa 1.6 bar.

Im Bereich von 0.0 bis 3.2 bar schaltet keines der Vorsteuerventile 931, 932, 933. Somit sind auch alle Ventile 941 942, 943 in ihrer Ruheposition. Die dritte Druckluftleitung 85, die zu den pneumatischen Bremszylindern 610 führt, ist entlüftet. Der Druck in den pneumatischen Bremszylindern 610 beträgt somit 0 bar. Der Druck in der dritten Druckluftleitung 85 wird mittels eines ersten Manometers 981 gemessen und angezeigt.

Dank dieser Kaskadenschaltung von Ventilen ist es möglich, den Bremszylinderdruck zwischen 0 und 5 bar mit einem Druck der Steuerleitung von ca. 3.2 bis 5 bar zu regeln. Eine maximale Bremswirkung von 100% wird bereits bei einem Druck in der Steuerleitung von 3.2 bar erreicht. In diesem Fall beträgt der Druck in den pneumatischen Bremszylindern 610 0 bar. Bei einem Druck von 3.9 bar in der Steuerleitung liegen 1.6 bar am Bremszylinder an. Die Bremswirkung beträgt circa 40%. Bei 4.3 bar in der Steuerleitung beträgt der Druck im Bremszylinder 2.2 bar und die Bremswirkung beträgt circa 20%. Bei 5 bar Druck in der Steuerleitung liegt derselbe Druck an den pneumatischen Bremszylindern 610 an. Die Federkraft der Bremsfedern ist überwunden und der Anhänger ist ungebremst.

Die Druckpunkte der Vorsteuerventile 931, 932, 933 sowie die Drosselwerte der Druckregler 951, 952 lassen sich vorzugsweise einstellen. Die Druckbereiche und die an die Bremsen anlegten Drücke lassen sich somit wählen. Dies erfolgt vorzugsweise auf Kundenwunsch werkseitig. Die hier angegebenen Druckwerte sind somit bevorzugt, jedoch lediglich beispielhaft zu verstehen. Auch lassen sich zwei, drei, vier oder mehr Ventile und Vorsteuerventile parallel zueinander anordnen. Werden mehr als drei Ventile und Vorsteuerventile verwendet, erhöht sich die Zahl der Wechselventile. Werden nur zwei Ventile und Vorsteuerventile verwendet, genügt ein einziges Wechselventil.

Sollte eine Notöffnung der Bremsen notwendig sein, so kommt die Hydraulikpumpe 4 zum Einsatz. Sie ist über eine Hydraulikleitung 40 mit den Hydraulikzylindern 62 der Bremseinheit 6 verbunden. Der Druck in der Hydraulikleitung 40 wird mittels eines zweiten Manometers 982 gemessen und angezeigt. Die zwei Manometer 981 und 982 sind am Rahmen 1 des Anhängers angebracht, vorzugsweise an gut sichtbarer Stelle. Vorzugsweise lässt sich die Hydraulikleitung zudem an das Zugfahrzeug koppeln zur Verwendung als Betriebsbremse.

Das erfindungsgemässe Bremssystem ermöglicht die Verwendung des gesamten zur Verfügung stehenden Druckbereichs für die Bremsung des Anhängers, obwohl die Steuerung des Traktionsfahrzeugs bereits bei einem höheren Druck einen Schlauchabriss meldet. Das Bremssystem ist zudem einfach aufgebaut und entsprechend kostengünstig. Es benötigt keine zusätzliche Elektronik.

**BEZUGSZEICHENLISTE**

| | | | |
|---|---|---|---|
| 1 | Rahmen | | Anhänger |
| 10 | Kupplung für Zugstange | 83 | erste Druckluftleitung |
| | | 84 | zweite Druckluftleitung |
| 2 | Rad | 85 | dritte Druckluftleitung |
| 20 | Spurachse | | |
| | | 90 | Rückschlagventil |
| 3 | Bremsluft-Anschluss | 91 | Luftbehälter |
| | | 921 | erstes Filter mit manueller |
| 4 | Hydraulikpumpe | | Drainage |
| 40 | Hydraulikleitung | 922 | zweites Filter mit manueller Drainage |
| 5 | Bremstrommel | 931 | erstes Vorsteuerventil |
| | | 932 | zweites Vorsteuerventil |
| 6 | Bremseinheit | 933 | drittes Vorsteuerventil |
| 60 | Bremsfeder | 941 | erstes Ventil |
| 61 | pneumatische Bremse | 942 | zweites Ventil |
| 610 | pneumatischer Bremszylinder | 943 | drittes Ventil |
| 62 | Hydraulikbremszylinder | 951 | erster Druckregler |
| 63 | Bremshebel | 952 | zweiter Druckregler |
| | | 961 | erstes Wechselventil |
| 7 | Bremsbox | 962 | zweites Wechselventil |
| | | 981 | erstes Manometer |
| 8 | Speiseleitung | 982 | zweites Manometer |
| 80 | Druckleitung im Anhänger | | |
| 81 | erster Sperrhahn | F | Traktionsfahrzeug |
| 82 | zweiter Sperrhahn | T2 | zweiter Anhänger |
| 820 | Anschluss für zweiten | | |

## Patentansprüche

1. Druckluftbetätigtes Bremssystem für einen Fahrzeug-Anhänger, insbesondere für einen ausgleisbaren Anhänger, wobei das Bremssystem mindestens zwei Ventile (941, 942, 943) zur Weiterleitung von Druckluft einer Steuerleitung (8) an eine pneumatische Bremse (61), vorzugsweise an mindestens einen pneumatischen Bremszylinder (610), des Fahrzeug-Anhängers aufweist,
**dadurch gekennzeichnet,**
**dass** jedem der Ventile (941, 942, 943) ein Vorsteuerventil (931, 932, 933) zugeordnet ist, das in Strömungsrichtung von der Steuerleitung (8) zur pneumatischen Bremse (61) vor dem Ventil (941, 942, 943) angeordnet ist,
**dass** ein erstes dieser mindestens zwei Vorsteuerventile (931, 932, 933) bei einem anderen Luftdruck schliesst als ein zweites dieser mindestens zwei Vorsteuerventile (931, 932, 933) und
**dass** mindestens eines der mindestens zwei Ventile (941, 942, 943) mit einem Druckregler (951, 952) zur Senkung der Druckluft der Steuerleitung (8) verbunden ist.

2. Bremssystem nach Anspruch 1, wobei die mindestens zwei Ventile (941, 942, 943), vorzugsweise alle Ventile (941, 942, 943), parallelgeschaltet sind.

3. Bremssystem nach einem der Ansprüche 1 bis 2, dass mindestens drei, vorzugsweise genau drei, Ventile (941, 942, 943) und zu jedem Ventil (941, 942, 943) je ein zugehöriges Vorsteuerventil (931, 932, 933) vorhanden ist.

4. Bremssystem nach einem der Ansprüche 1 bis 3, wobei mindestens eines der Ventile (943) keiner Druckreduzierung ausgesetzt ist.

5. Bremssystem nach einem der Ansprüche 1 bis 4, wobei die Ventile (941, 942, 943) 3/2- Wege-Ventile sind.

6. Bremssystem nach einem der Ansprüche 1 bis 5, wobei jeweils nur eines der Ventile (941, 942, 943) mit der pneumatischen Bremse (61) verbunden ist..

7. Bremssystem nach einem der Ansprüche 1 bis 6, jedes Vorsteuerventil (931, 932, 933) an einem anderen Druckpunkt schliesst als die übrigen Vorsteuerventile (931, 932, 933).

8. Bremssystem nach einem der Ansprüche 1 bis 7, wobei alle Ventile (941, 942, 943) bis auf eines mit je einem Druckregler (951, 952) zur Senkung der Druckluft der Steuerleitung (8) verbunden sind.

9. Bremssystem nach einem der Ansprüche 1 bis 8, wobei mindestens ein Wechselventil (961, 962) vorhanden ist zur Verbindung der Ventile (941, 942, 943) mit der pneumatischen Bremse (61), wobei das mindestens eine Wechselventil (961, 962) dasjenige Ventil (941, 942, 943) verbindet, über das der höchste Luftdruck an das mindestens eine Wechselventil (961, 962) angelegt ist..

10. Bremssystem nach Anspruch 9, wobei mindestens zwei Wechselventile (961, 962) vorhanden sind, die in Strömungsrichtung hintereinander angeordnet sind.

11. Bremssystem nach einem der Ansprüche 9 oder 10, wobei zwischen dem letzten des mindestens einen Wechselventils (961) und der pneumatischen Bremse (61) ein Manometer (981) zur Bestimmung des Luftdrucks angeordnet ist.

12. Bremssystem nach einem der Ansprüche 1 bis 11, wobei bei einem maximalen Speisedruck, vorzugsweise von ungefähr 5 bar, alle Vorsteuerventile offen sind, wobei ein erstes Vorsteuerventil (931) bei einem ersten Druckpunkt, vorzugsweise von ungefähr 4.3 bar, schliesst, wobei ein zweites Ventil (942) ab diesem ersten Druckpunkt den Speisedruck gedrosselt, vorzugsweise auf ungefähr 2.2 bar, an die pneumatische Bremse (61) leitet, wobei ein zweites Vorsteuerventil (932), das auf das zweite Ventil (942) wirkt, bei einem tieferen zweiten Druckpunkt, vorzugsweise von ungefähr 3.9 bar, schliesst, wobei ein drittes Ventil (943) ab diesem zweiten Druckpunkt den Speisedruck gedrosselt, vorzugsweise auf ungefähr 1.6 bar, an die pneumatische Bremse (61) leitet, wobei ein drittes Vorsteuerventil (933), das auf das dritte Ventil (943) wirkt, bei einem tieferen dritten Druckpunkt, vorzugsweise von ungefähr 3.2 bar, schliesst, wobei ab diesem dritten Druckpunkt ein nächsten Ventil mit zugehörigem Vorsteuerventil folgt oder wobei ab diesem dritten Druckpunkt eine Bremsleitung (5) zur pneumatischen Bremse (61) entlüftet wird und der Luftdruck über der pneumatischen Bremse (61) auf 0 bar fällt.

13. Bremssystem nach einem der Ansprüche 1 bis 12, wobei es ferner eine hydraulische Notbremse mit einer Hydraulikpumpe (4) und mindestens einem Hydraulikbremszylinder (62) aufweist.

14. Bremssystem nach einem der Ansprüche 1 bis 13, wobei eine Bremswirkung mit zunehmendem Druck abnimmt, wobei bei einem vorgegebenen Maximaldruck keine Bremswirkung und bei Atmosphärendruck maximale Bremswirkung vorliegt.

15. Verfahren zum Betreiben eines druckluftbetätigtes Bremssystem für einen Fahrzeug-Anhänger, insbesondere für einen ausgleisbaren Anhänger, wobei ein Speisedruck auf eine pneumatische Bremse wirkt, wobei die pneumatische Bremse bei einem Maximaldruck gelöst ist und bei einem pneumatischen Minimaldruck maximal aktiviert ist, wobei der Speisedruck zwischen dem Maximaldruck und einem Abrissdruck, bei welchem eine Notbremsung ausgelöst wird, variiert wird, wobei der Abrissdruck höher ist als der Minimaldruck, **dadurch gekennzeichnet, dass** der Speisedruck in Abhängigkeit von seinem Druckwert über jeweils ein anderes Ventil zur pneumatischen Bremse geleitet wird, wobei der Speisedruck bei Weiterleitung über mindestens eines dieser Ventile gedrosselt weitergeleitet wird.
